# FASCICULE DE BREVET EUROPEEN

(11) **EP 3 436 706 B1**
(45) Date de publication et mention de la délivrance du brevet: **22.04.2020**
(21) Numéro de dépôt: 17717486.9
(22) Date de dépôt: 30.03.2017
(51) Int. Cl.: F15B 13/01, F16K 15/04

(54) **BLOC DE SÉCURITÉ À DOUBLE CLAPET POUR VÉRIN HYDRAULIQUE**
SICHEREITSBLOCK MIT DOPPELTEM VENTIL FÜR EINEN HYDRAULISCHEN ZYLINDER
SAFETY BLOCK WITH DOUBLE VALVE FOR A HYDRAULIC CYLINDER

(30) Priorité: 31.03.2016 FR 1652840
(43) Date de publication de la demande: 06.02.2019
(73) Titulaire: Lohr Industrie, 67980 Hangenbieten (FR)
(72) Inventeur: ANDRE, Jean-Luc, 67120 MOLSHEIM (FR)
(74) Mandataire: Merckling, Norbert
(86) Numéro de dépôt international: PCT/FR2017/050738
(87) Numéro de publication internationale: WO 2017/191380

(56) Documents cités:
- EP-B1- 0 935 715
- DE-A1-102009 017 031
- JP-A- 2005 077 275

## Description

### Domaine technique

La présente invention se rapporte au domaine technique des vérins dits « de sécurité ». Elle concerne plus particulièrement un dispositif de sécurité pour le maintien en position de la tige d'un vérin hydraulique double-effet.

Cette invention concerne par exemple les véhicules portes-voitures ou tout autre équipement supportant des charges au moyen de vérins hydrauliques double-effet.

### Etat de la technique

Les vérins hydrauliques double-effet sont très utilisés pour soulever des charges et les maintenir en l'air. On les emploie fréquemment dans les domaines des transports, de l'industrie, du bâtiment et dans tous les domaines où il est nécessaire de réaliser des mouvements d'élévation, d'abaissement et/ou de maintien d'une charge impliquant des efforts importants. C'est par exemple le cas dans les véhicules portes-voitures qui comportent classiquement plusieurs plateaux mobiles destinés à recevoir les voitures à transporter, et dont la position et la hauteur sont réglables au moyen de différents actionneurs dont des vérins hydrauliques double-effet.

Pour des raisons de sécurité, il est absolument indispensable de garantir le maintien en position de la tige du vérin lorsque son déplacement n'est pas commandé, et ceci même, et surtout, lorsqu'elle supporte une charge. En effet, pour garantir la sécurité des opérateurs et des biens pouvant se trouver en dessous, la hauteur de la charge ne doit pas varier au fil du temps sans action volontaire de la part de l'opérateur. Pour cela, en l'absence de commande, la tige d'un vérin hydraulique doit être immobilisée en rentrée, comme en sortie, qu'elle supporte une charge ou non.

Dans l'art antérieur, on maintient classiquement un vérin sous charge au moyen d'un clapet anti-retour inséré dans le circuit d'alimentation du vérin dans le sens passant vers la chambre de sortie de sa tige. Cependant, cet ensemble de maintien sous charge n'est assuré que si l'on peut garantir l'étanchéité du clapet. Or, un clapet peut présenter progressivement ou soudainement un défaut d'étanchéité après une certaine période d'utilisation et ceci pour diverses raisons, liées par exemple à un défaut de construction, à un problème de fonctionnement ou d'entretien, ou encore au vieillissement du clapet. Un tel défaut d'étanchéité va engendrer une fuite qui, même si elle est limitée, est susceptible de provoquer après plusieurs heures de retenue un abaissement lent de la charge, dangereux pour les biens et les personnes situés en dessous.

Pour pallier ce risque de défaillance du clapet, on a développé dans l'art antérieur des dispositifs mécaniques de blocage associés à ces vérins de levage. Il s'agit de système de blocage manuel, par exemple des broches de verrouillage. Cependant, ces dispositifs mécaniques de blocage ne sont pas automatiques et doivent être mis en place manuellement. Un risque d'oubli ou de mauvaise manipulation de la part de l'opérateur est donc toujours possible.

On connait également, par le brevet EP0935715, un dispositif automatique de maintien développé dans le but de se dispenser de l'utilisation de ces moyens mécaniques traditionnels de retenue. Ce dispositif est constitué d'un bloc hydraulique d'isolement qui remplace le clapet anti-retour classique monté dans le circuit d'alimentation du vérin. Ce bloc hydraulique, à travers lequel est alimentée la chambre de sortie de la tige du vérin, comprend un clapet anti-retour primaire à bille, qui est doublé par un deuxième clapet dit « de sécurité » fermé par un pointeau conique à tige. Ces deux clapets successifs sont disposés chacun à l'une des entrées d'un sas, la fermeture du clapet de sécurité se faisant de manière différée par rapport à celle du clapet primaire. Lorsque l'opérateur commande l'ouverture du dispositif, un moyen de commande à tige ouvre le clapet de sécurité en poussant sur le pointeau conique qui se déplace dans le sas. Par ce mouvement, la tige du pointeau vient pousser la bille du clapet primaire qui s'ouvre à son tour.

Ce dispositif connu a plusieurs avantages par rapport aux systèmes antérieurs. Il est d'abord plus sécuritaire que le clapet anti-retour classique du fait de l'utilisation de deux clapets successifs au lieu d'un seul. En outre, il permet un verrouillage automatique, sans l'intervention de l'opérateur et dans n'importe quelle position de la tige du vérin.

Cependant, ce dispositif antérieur présente certains inconvénients qui l'empêchent de garantir la parfaite sécurité recherchée.

Avec un tel dispositif, il existe toujours un risque de fuite aggravé par le caractère hyperstatique du dispositif. En effet, le pointeau conique est guidé en coulissement par sa tige, de façon serrée et hyperstatique. Comme cette tige est liée au pointeau conique du clapet de sécurité, le positionnement de l'une de ces pièces conditionne le positionnement de l'autre pièce qui lui est liée. Si l'une d'elle est mal orientée ou présente un défaut de géométrie, cela provoque un mauvais positionnement de la seconde. Pour que le clapet secondaire se ferme correctement, la réalisation des usinages doit donc être parfaite en centrage comme en géométrie, le moindre défaut de perpendicularité pouvant entrainer une fuite car des forces contradictoires sont générées. Ces fuites peuvent apparaitre dès le début, en cas de défaut de construction, ou plus tard, en cas de modification de la géométrie liée par exemple à l'usure ou la présence d'une impureté gênante.

En outre, ce dispositif ne verrouille l'huile que dans une seule des chambres du vérin hydraulique. Aucune sécurité n'est prévue pour empêcher la fuite de l'huile qui se trouve dans la deuxième chambre du vérin située du côté tige. La sortie de la tige n'est donc pas verrouillée.

Pour toutes ces raisons, ce dispositif antérieur n'est pas parfaitement sécuritaire.

### Exposé de l'invention

Le but de l'invention est de proposer un bloc de sécurité alternatif, qui ne présente pas les inconvénients de ce système antérieur, tout en conservant ses avantages.

Pour cela, l'invention enseigne un bloc de sécurité à double clapet en série, qui garantit, par le verrouillage du débit hydraulique, le maintien en position de la tige d'un vérin hydraulique double-effet comprenant un fût, compartimenté par un piston mobile portant ladite tige, en une chambre coté fond et une chambre coté tige, ces chambres communiquant chacune avec une conduite hydraulique spécifique permettant l'entrée ou la sortie de fluide dans ou hors de la chambre concernée, bloc de sécurité comportant un dispositif d'isolement, monté sur l'une des conduites hydrauliques et à travers lequel la chambre correspondante du vérin est alimentée. Ce dispositif d'isolement comprend un clapet primaire et un clapet secondaire, le clapet primaire étant le plus proche de la chambre concernée, tous deux passants dans le même sens correspondant à l'entrée du fluide dans la chambre concernée et disposés l'un à la suite de l'autre en série.

Le bloc de sécurité selon l'invention comporte deux dispositifs d'isolements, montés chacun sur l'une des conduites hydrauliques, chacune des chambres du vérin étant alimentée à travers l'un de ces dispositifs d'isolement.

Les deux chambres du vérin peuvent ainsi être verrouillées, afin d'empêcher l'huile de s'en échapper. La tige du vérin est complètement verrouillée, aussi bien en rentrée qu'en sortie. Le maintien de sa position est ainsi garanti dans les deux sens.

En outre, le clapet primaire et le clapet secondaire de chacun de ces dispositifs d'isolement sont des clapets anti-retour à bille, comprenant un siège et une bille.

Chacun de ces dispositifs d'isolement comporte en outre :
- une tige coulissante indépendante, disposée longitudinalement et intercalée entre les billes des clapets primaire et secondaire, mais non liée à celles-ci, et susceptible de coulisser vers chacune de ces billes de manière à venir appuyer par l'une de ses extrémités contre la bille située en vis-à-vis, et
- un élément de guidage de la tige coulissante qui assure un guidage de la tige coulissante lors de son coulissement.

De plus, dans chacun de ces dispositifs d'isolement, la longueur de la tige est prévue suffisamment courte pour ne pas pouvoir être en contact simultanément avec les deux billes en appui sur leur siège respectif lorsque les deux clapets primaire et secondaire sont fermés ; mais suffisamment longue pour que la commande en ouverture du clapet secondaire entraine, par le déplacement de sa bille qui vient pousser l'extrémité correspondante de la tige coulissante, le coulissement guidé de la tige coulissante vers le clapet primaire et provoque l'ouverture du clapet primaire dont la bille est poussée par l'autre extrémité de la tige coulissante.

Les deux billes des clapets et la tige étant parfaitement indépendantes les unes des autres, il n'existe plus aucun problème d'hyperstaticité. Contrairement à la tige liée du pointeau de l'art antérieur, la tige indépendante du bloc selon l'invention ne peut pas contraindre les billes des clapets à un mauvais positionnement. Les billes se centrent automatiquement sur leur siège respectif, sans être influencées par les autres éléments du système avec lesquels elles ne sont pas en contact. Les risques de fuites sont donc limités et la sécurité s'en trouve renforcée.

Selon un mode de réalisation préférentiel de l'invention, dans l'un au moins des dispositifs d'isolement, le clapet primaire et le clapet secondaire ne sont pas identiques.

Selon ce mode de réalisation, ledit clapet primaire et ledit clapet secondaire sont préférentiellement différents sur au moins l'une des caractéristiques suivantes : la matière de leur bille ou de leur siège, ou le diamètre de leur bille, ou la raideur de leur ressort de rappel.

Le comportement de ces deux clapets et leur usure dans le temps seront donc différents. De même, le risque d'être confronté à un même défaut de construction de série sur les éléments constitutifs de ces deux clapets sera évité. Ainsi, on limite considérablement le risque d'une fuite simultanée de ces deux clapets et l'étanchéité globale du dispositif d'isolement reste garantie.

Selon un mode de réalisation de l'invention, l'élément de guidage est un support de guidage sensiblement cylindrique, dans lequel la tige coulissante est montée, qui coulisse de façon guidée dans un alésage prévu pour la bille du clapet primaire. Cet alésage ou ce support de guidage comporte au moins une rainure longitudinale permettant le passage du fluide hydraulique malgré la présence de la tige coulissante et du support de guidage dans l'alésage.

Selon un mode de réalisation préférentiel, le bloc de sécurité de l'invention comporte un corps unique dans lequel sont logés les deux dispositifs d'isolement.

Selon un mode de réalisation de l'invention, chaque dispositif d'isolement comporte une pièce de commande située à proximité du clapet secondaire, du côté opposé au clapet primaire. Cette pièce de commande peut se déplacer en direction du clapet secondaire et venir pousser la bille du clapet secondaire pour provoquer son ouverture.

Selon un mode de réalisation préférentiel de l'invention, les deux dispositifs d'isolement comportent une pièce de commande unique susceptible de provoquer alternativement l'ouverture du clapet secondaire de chacun des deux dispositifs d'isolement.

La construction du dispositif s'en trouve avantageusement simplifiée. Le poids de l'ensemble et son coût de fabrication sont réduits. En outre, le nombre de pièces, notamment de joints d'étanchéité, à entretenir est ainsi diminué.

Selon ce mode de réalisation, la pièce de commande unique peut être une navette centrale coulissante disposée entre les deux dispositifs d'isolement, susceptible de se déplacer alternativement en direction de chacun de ces dispositifs d'isolement, et qui, lorsqu'elle arrive à proximité de l'un de ces dispositifs d'isolement, provoque l'ouverture de son clapet secondaire.

Selon un mode de réalisation de l'invention, la navette centrale est retenue en position centrale entre les deux dispositifs d'isolement par deux ressorts de rappel opposés.

Selon un mode de réalisation de l'invention, la pièce de commande comporte deux doigts latéraux saillants, s'étendant chacun en direction de l'un des dispositifs d'isolement, et dont l'extrémité libre vient pousser la bille du clapet secondaire de ce dispositif d'isolement lorsque la pièce de commande arrive à proximité de celui-ci provoquant ainsi son ouverture, ces deux doigts latéraux saillants étant prévus suffisamment courts pour que leurs extrémités libres ne puissent pas être en contact simultanément avec les deux billes des deux clapets secondaires lorsque ces billes sont en appui sur leur siège respectif en position fermée des clapets secondaires.

Selon un mode de réalisation de l'invention, chacune des faces latérales de la pièce de commande est en communication avec l'une des conduites hydrauliques ; et la pièce de commande comporte un joint périmétrique qui s'oppose au passage de fluide hydraulique de l'une à l'autre des conduites hydrauliques.

Selon un autre mode de réalisation de l'invention, le bloc de sécurité comporte en outre au moins une pièce aimantée qui attire les particules métalliques polluantes éventuellement présentes dans le fluide hydraulique. De ce fait, ces particules polluantes ne risquent plus de se loger au niveau du siège des clapets où elles pourraient être à l'origine d'une fuite, ni de gêner le coulissement d'une pièce nécessaire au bon fonctionnement du dispositif.

L'invention enseigne également un vérin hydraulique double-effet de sécurité, comprenant un fût, une tige et un piston qui compartimente le fût en une chambre coté fond et une chambre coté tige. Ce vérin comporte en outre un bloc de sécurité selon l'invention.

Selon un mode de réalisation préférentiel de l'invention, le bloc de sécurité est intégré ou directement fixé sur le fût.

Avantageusement, le bloc de sécurité peut être fixé sur le fût au moyen d'une vis creuse à travers laquelle la chambre côté fond est mise en communication hydraulique avec le clapet primaire du dispositif d'isolement correspondant.

D'autre part, le bloc de sécurité peut avantageusement reposer sur un pion fixé sur le fût, l'extrémité libre de ce pion étant engagée dans une cavité oblongue ménagée dans le bloc de sécurité et orientée longitudinalement, c'est-à-dire selon l'axe principal du bloc de sécurité, afin d'autoriser un jeu longitudinal.

### Brève description des figures

D'autres caractéristiques et avantages de l'invention apparaîtront à la lecture de la description détaillée qui va suivre, description faite en référence aux dessins annexés, dans lesquels :
- la figure 1 est une vue générale en perspective d'un exemple de vérin de sécurité selon l'invention ;

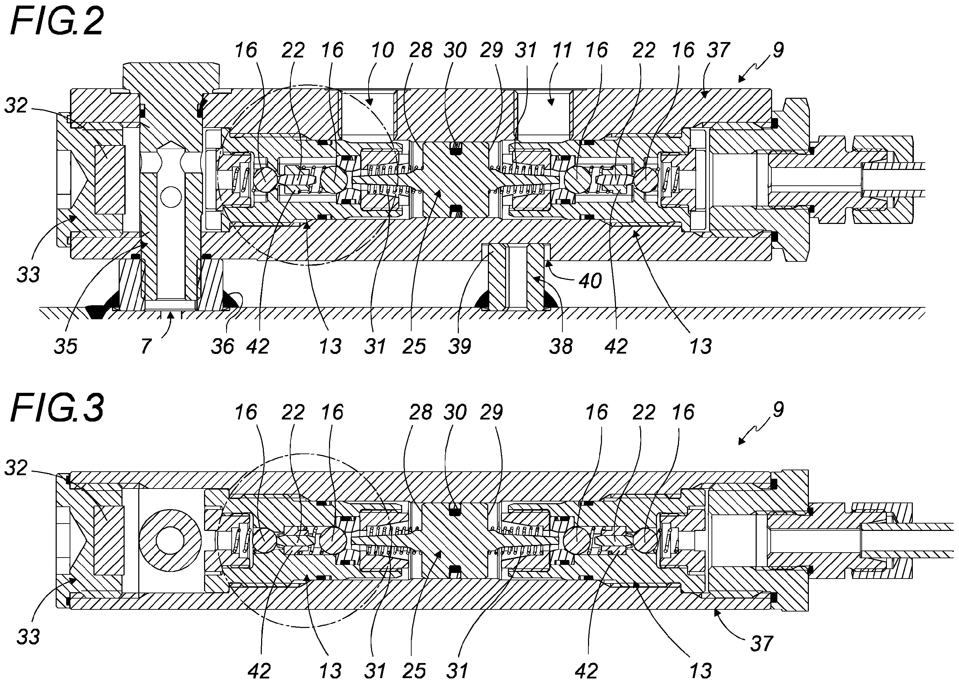

- les figures 2 et 3 sont des vues en coupe longitudinale, selon un plan de coupe respectivement vertical et horizontal, d'un bloc de sécurité selon une variante préférentielle de l'invention ;
- les figures 4 et 5 sont des agrandissements des détails encerclés respectivement sur les figures 2 et 3 ;

- les figures 6 à 11 sont des vues en coupe longitudinales verticales, à chaque fois du vérin de sécurité complet et de son bloc de sécurité, qui illustrent schématiquement le fonctionnement du dispositif,
   - lors de la sortie de la tige du vérin pour les figures 6 et 7,
   - lors la rentrée de la tige du vérin pour les figures 8 et 9, et
   - à l'état verrouillé pour les figures 10 et 11.

### Exposé détaillé de l'invention

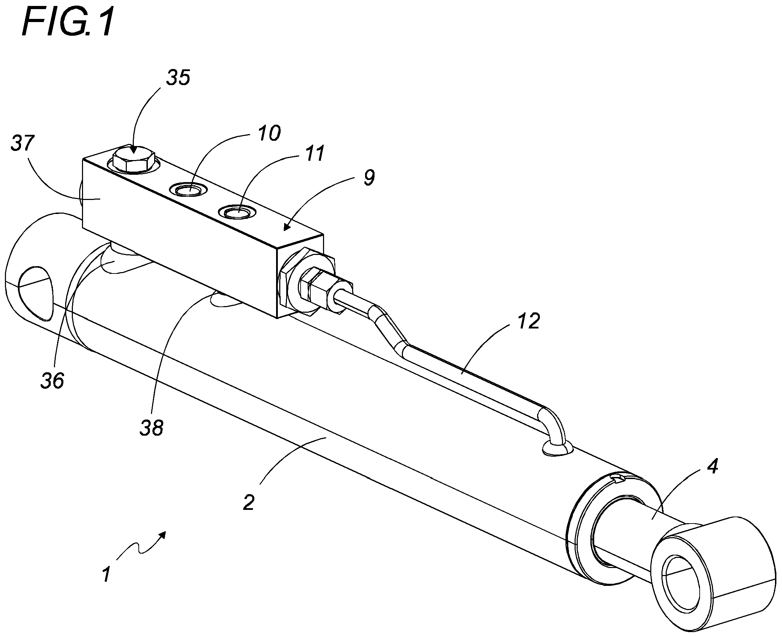

On a représenté sur la figure 1, un exemple de vérin 1 de sécurité selon l'invention.

Ce vérin 1 est un vérin hydraulique double-effet qui comporte un fût 2, sensiblement cylindrique, à l'intérieur duquel se déplace un piston 3 sous l'effet de la pression du fluide hydraulique. Une tige 4 est classiquement montée sur le piston 3 et s'étend à l'intérieur du fût 2 d'un côté de ce piston 3 et jusqu'à l'extérieur du vérin 1 où elle peut être utilisée pour soulever des charges.

Le piston 3 sépare donc l'espace intérieur du fût 2 en deux chambres hydrauliquement indépendantes : une chambre côté fond 5 et une chambre côté tige 6. Chacune de ces chambres comportent donc un orifice différent, respectivement 7 et 8, d'entrée et/ou de sortie du fluide hydraulique pour remplir ou vider la chambre concernée.

Selon l'invention, le vérin hydraulique 1 est équipé d'un bloc de sécurité 9 qui est monté sur le circuit hydraulique du vérin de manière que le fluide qui alimente et ressort des chambres du vérin passe par ce bloc de sécurité 9. Il est ainsi relié d'une part aux orifices 7 et 8 des chambres 5 et 6 du vérin, et d'autre part comporte deux entrées 10 et 11 qui sont reliées respectivement au circuit hydraulique d'alimentation de la chambre côté fond 5 et de la chambre côté tige 6 du vérin hydraulique 1.

Afin d'éviter tout risque de fuite, ce bloc de sécurité 9 est préférentiellement flasqué ou intégré au fût 2 du vérin 1. Il peut également être rapporté sur celui-ci, et par exemple vissé au fût 2.

Dans ce cas, les circuits hydrauliques entre le bloc de sécurité 9 et les chambres du vérin se font de préférence sans tuyauterie souple, et préférentiellement sans aucune tuyauterie entre le bloc de sécurité 9 et la chambre côté fond 5 du vérin. On peut ainsi, par exemple, utiliser avantageusement pour cela une vis creuse 35 qui sert à la fois à réaliser la fixation directe du bloc de sécurité 9 sur le fût 2 du vérin et à réaliser par son canal interne la liaison hydraulique entre l'orifice 7 de la chambre côté fond 5 et le bloc de sécurité 9. L'étanchéité à ce niveau est préférentiellement complétée par un joint conique 36 placé à la base de cette vis creuse 35.

De l'autre côté, un conduit rigide 12 relie de préférence l'orifice 8 de la chambre côté tige 6 au bloc de sécurité 9.

Le bloc de sécurité 9 comprend deux dispositifs d'isolement 13. Ces deux dispositifs d'isolement sont préférentiellement regroupés dans un carter ou corps 37 unique. Le dispositif est ainsi plus compact et plus économique à fabriquer. Il est également beaucoup plus simple et rapide à installer. En outre, on diminue ainsi les liaisons hydrauliques et les risques de fuite qui en découlent.

De préférence, le corps 37 est orienté longitudinalement par rapport au fût 2 du vérin, c'est-à-dire que son axe principal est parallèle à l'axe principal du fût 2.

Pour compléter le maintien, le dispositif peut comporter, en plus de la vis creuse 35, un pion 38 fixé préférentiellement par soudage sur le fût 2 sur lequel le corps 37 du bloc de sécurité 9 vient reposer. L'extrémité libre 39 de ce pion 38 vient s'engager dans une cavité 40, préférentiellement oblongue et orientée longitudinalement, qui est ménagée dans le corps 37 du bloc de sécurité 9. Le bloc de sécurité 9 n'est ainsi fixé de manière serrée qu'à une seule de ses extrémités (par la vis creuse 35), sa deuxième extrémité étant simplement retenue de manière non-hyperstatique par l'engagement du pion 38 dans la cavité 40. Du fait de la forme oblongue de la cavité 40, un jeu longitudinal du bloc de sécurité par rapport au pion 38 reste possible, ce qui facilite le montage et permet d'absorber les vibrations liées au roulage sans risquer de fuites au niveau de la vis creuse 35. Cependant, par cet engagement du pion 38 dans la cavité 40, le bloc de sécurité 9 est bloqué en pivotement latéral ce qui permet d'éviter les fuites au niveau de la jonction avec le conduit rigide 12.

Chacun des dispositifs d'isolement 13 comporte deux clapets anti-retour 14, disposés l'un à la suite de l'autre, en série. Ces clapets anti-retour 14 sont, tous les deux, des clapets à billes renfermant un alésage 15 sensiblement cylindrique dans lequel se déplace une bille 16. Cet alésage 15 se termine par une partie rétrécie formant un siège 17 pour la bille 16 lorsqu'elle se retrouve en appui sur celui-ci, fermant ainsi le clapet de manière étanche.

Ces sièges 17 peuvent être conformés directement dans la pièce formant le corps du dispositif d'isolement 13, ou peuvent également être réalisés dans une pièce indépendante 18 qui est montée sur le corps du dispositif d'isolement, dans le prolongement de l'alésage 15. Cette pièce indépendante 18 peut être avantageusement réalisée dans une autre matière que celle du corps du dispositif d'isolement 13, notamment du bronze, du plastique ou autre. Dans ce cas, un joint 41, par exemple torique, peut venir si nécessaire compléter l'étanchéité à ce niveau.

Les billes 16 sont préférentiellement maintenues en appui contre leur siège 17 par un ressort de rappel 19 se trouvant dans l'alésage 15 qui, s'il est présent, les plaque contre leur siège 17 en l'absence d'une force suffisante agissant sur la bille en sens contraire.

Ces deux clapets anti-retour 14 sont montés passants dans le même sens, à savoir le sens correspondant à l'entrée du fluide dans la chambre correspondante du vérin hydraulique 1.

Dans un but de simplification, on appellera dans cette demande de brevet : « clapet primaire 20 » le clapet 14 situé le plus près de la chambre du vérin et « clapet secondaire 21 » celui situé du côté du circuit d'alimentation hydraulique, c'est-à-dire du côté de plus éloigné de la chambre du vérin.

Selon l'invention, chaque dispositif d'isolement 13 comporte en outre une tige coulissante 22, orientée longitudinalement dans le sens d'écoulement du fluide et placée entre les deux billes 16 du clapet primaire 20 et secondaire 21. Cette tige coulissante 22 est une pièce indépendante qui n'est liée à aucune des deux billes 16 et qui peut coulisser de manière guidée entre celles-ci. Pour cela, un élément de guidage 42 est avantageusement prévu afin d'assurer le guidage de la tige coulissante 22 lors de son coulissement.

Cet élément de guidage 42 peut être de nature quelconque lui permettant de remplir sa fonction. Sur les exemples représentés, il s'agit d'un support de guidage 23 sensiblement cylindrique, dans lequel la tige coulissante 22 est montée, et dont le diamètre est avantageusement choisi pour permettre un coulissement guidé de l'ensemble tige coulissante 22 / support de guidage 23 dans l'alésage 15 prévu pour la bille 16 et le ressort de rappel 19 du clapet primaire 20.

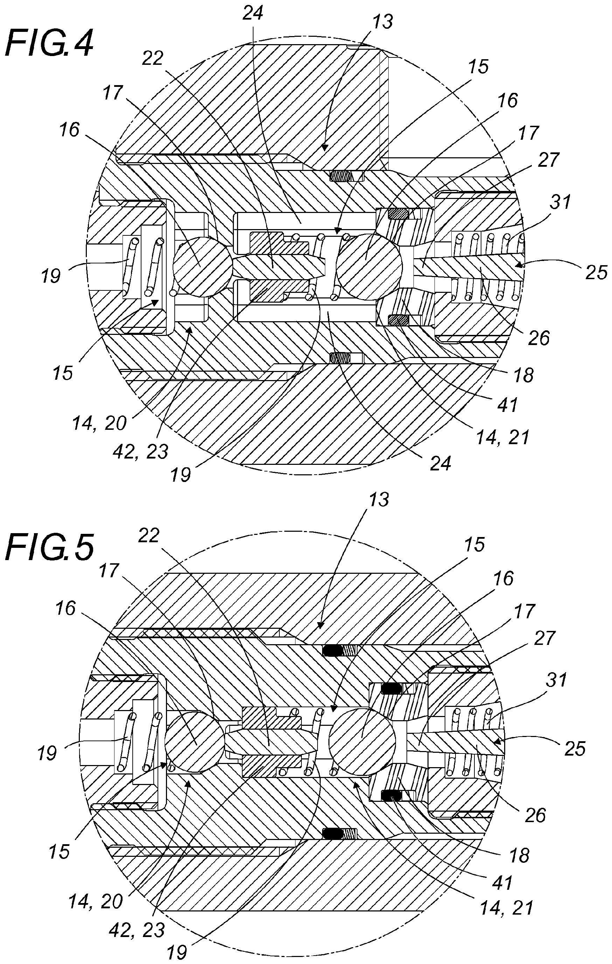

Afin de permettre l'écoulement du fluide hydraulique malgré la présence de la tige coulissante 22 et de son support de guidage 23 dans cet alésage 15, une ou plusieurs rainures longitudinales 24 peuvent avantageusement être aménagées dans les parois de l'alésage 15 ou dans le support de guidage 23. Un exemple de telles rainures longitudinales est par exemple représenté sur l'agrandissement de la figure 4 et visible par comparaison avec l'agrandissement de la figure 5 réalisé selon un autre plan de coupe.

La tige coulissante 22 peut ainsi coulisser librement d'un côté à l'autre de l'alésage 15 sans gêner l'écoulement du fluide hydraulique, et peut ainsi se déplacer en direction de chacune des billes 16 des clapets primaire 20 et secondaire 21 qui l'entourent, jusqu'à venir appuyer par l'une de ses extrémités contre la bille 16 située en vis-à-vis.

Cependant, par construction, la tige coulissante 22 est trop courte pour pouvoir être en contact simultanément avec les deux billes 16 lorsque celles-ci se trouvent en appui contre leur siège 17 respectif, en position fermée des deux clapets primaire 20 et secondaire 21. Il existe donc un jeu longitudinal entre la tige 22 et les deux billes 16 en appui sur leur siège 17 respectif. Donc, et même en cas de mauvais positionnement, la tige coulissante 22 ne peut pas gêner la fermeture des deux clapets simultanément et être responsable d'une fuite à travers le dispositif d'isolement 13.

Comme expliqué dans la partie introductive, le clapet primaire 20 et le clapet secondaire 21 sont préférentiellement réalisés sans mode commun, c'est-à-dire qu'ils sont différents l'un de l'autre et que leurs pièces jouant un rôle pour l'étanchéité ne sont pas identiques, afin de renforcer la sécurité.

On pourra ainsi prévoir, par exemple, deux billes 16 de diamètre différent et/ou de matière différente. De même, les sièges 17 des deux clapets peuvent être réalisés dans des matériaux différents, par exemple pour l'un en acier et pour l'autre en bronze. On peut également prévoir d'en conformer un directement dans le corps du dispositif d'isolement 13, tandis que l'autre se trouve sur une pièce indépendant, différente, rapportée. Les ressorts de rappel 19 utilisés peuvent également être choisis différents l'un de l'autre et avoir avantageusement des raideurs différentes.

Les deux clapets 20, 21 étant ainsi complétement différents l'un de l'autre, il est ainsi très peu probable qu'ils fuient simultanément, que ce soit dès le début ou au fil du temps. En effet, les pièces, ne provenant pas des mêmes séries, ont peu de chance de présenter les mêmes défauts de construction. En outre, étant de nature, de taille et de composition différentes, elles évoluent différemment dans le temps et ne réagissent pas de la même façon aux différentes agressions qu'elles sont susceptibles de rencontrer. Une fuite simultanée de ces deux clapets est donc hautement improbable, ce qui rend les dispositifs d'isolement 13 et le bloc de sécurité 9 qui les contient, extrêmement sécuritaires.

Afin que l'opérateur puisse commander l'ouverture de chacun de ces dispositifs, le bloc de sécurité 9 comporte en outre une pièce de commande 25 susceptible de provoquer l'ouverture du clapet secondaire 21 lorsque l'opérateur le désire. Cette pièce de commande 25 est préférentiellement située à proximité du clapet secondaire 21, du côté opposé au clapet primaire 20. Il s'agit de préférence d'une pièce mécanique qui se déplace en direction du clapet secondaire 21, afin de venir pousser la bille 16 de ce clapet pour provoquer son ouverture.

Comme représenté, la pièce de commande 25 peut avantageusement comporter pour cela un doigt latéral saillant 26, qui s'étend en direction du clapet secondaire 21 et dont l'extrémité libre 27 est susceptible de s'engager à travers le siège 17 de ce clapet, afin de pousser la bille 16 et provoquer ainsi l'ouverture de ce clapet secondaire 21.

Comme représenté, la pièce de commande 25 peut être, avantageusement, une navette coulissante servant de frontière aux deux circuits hydrauliques séparés qui alimentent indépendamment les deux chambres 5 et 6 du vérin 1. Chacune des faces latérales 28 et 29 de cette navette est ainsi en communication avec l'un de ces circuits hydrauliques.

Un joint périmétrique 30 monté sur cette navette peut optionnellement compléter la barrière formée par celle-ci et assurer l'étanchéité entre les deux circuits hydrauliques, tout en autorisant le coulissement longitudinal de la pièce de commande 25. Ce joint permet ainsi de garantir que la totalité du fluide hydraulique envoyé se retrouve dans la chambre correspondante du vérin et provoque une rentrée ou sortie de la tige 4 du vérin de la longueur attendue. Ceci est particulièrement important dans le cas où le vérin fait partie d'en ensemble de plusieurs vérins devant agir de manière symétrique.

Sans ce joint, une partie du fluide hydraulique envoyé pourrait passer de l'autre côté et s'échapper par l'autre entrée, provoquant ainsi une perte de pression hydraulique qui n'est pas forcément gênante selon les applications.

Avec un tel mode de réalisation, le déplacement de la pièce de commande 25 en direction du clapet secondaire 21 est provoqué automatiquement par la pression du fluide hydraulique, comme il sera expliqué ci-après, lorsque l'opérateur commande l'ouverture de ce clapet.

En l'absence de commande de l'opérateur, la pièce de commande 25 est préférentiellement maintenue éloignée du clapet secondaire 21 par un ressort de rappel 31.

Sur le mode de réalisation préférentiel représenté, ces deux dispositifs d'isolement 13 sont en outre jumelés, c'est-à-dire que leur fonctionnement est lié l'un à l'autre et n'est pas indépendant.

Pour cela, le bloc de sécurité 9 ne comporte qu'une unique pièce de commande 25, disposée entre les deux dispositifs d'isolement 13, capable de provoquer alternativement l'ouverture du clapet secondaire 21 de chacun de ces deux dispositifs d'isolement 13.

Cette pièce de commande 25 unique est préférentiellement une navette centrale coulissante qui comporte sur chacune de ces faces latérales 28 et 29 un doigt latéral saillant 26, s'étendant en direction de l'un des dispositifs d'isolement 13. Ainsi, lorsque cette pièce de commande 25 se déplace en direction de l'un des dispositifs d'isolement 13, l'extrémité libre du doigt latéral saillant 26 situé en vis-à-vis vient pousser la bille 16 du clapet secondaire 21 concerné et provoque ainsi son ouverture.

Comme précédemment, les doigts latéraux 26 de la pièce de commande 25 sont prévus par construction trop courts pour atteindre simultanément les deux billes 16 des clapets secondaires 21 en vis-à-vis. Un jeu longitudinal est ainsi garanti, et même en cas de mauvais positionnement, la pièce de commande 25 ne peut pas provoquer l'ouverture simultanée des deux clapets secondaires 21.

Avantageusement, la pièce de commande 25 peut être retenue en position centrale, entre les deux dispositifs d'isolement 13, par deux ressorts de rappel 31 opposés, qui, lorsqu'ils sont présents, agissent chacun sur l'une des faces latérales 28, 29 de la pièce de commande 25 unique pour la ramener en position sensiblement centrale. De même, lorsque la pièce de commande 25 unique se trouve dans cette position centrale, ses doigts latéraux 26 sont trop courts par construction pour atteindre les billes 16 des clapets secondaires 21 en vis-à-vis.

Le bloc de sécurité 9 selon l'invention peut comporter en outre une ou plusieurs pièces aimantées 32, placées de manière à être en contact avec le fluide hydraulique circulant dans l'un des circuits hydrauliques traversant le bloc de sécurité 9. Cette pièce aimantée 32 a pour fonction d'attirer des éventuelles particules métalliques présentes dans le fluide hydraulique afin de le débarrasser de ces impuretés polluantes.

Ainsi retenues par la pièce aimantée 32, ces particules ne sont plus susceptibles de ce déposer au niveau des sièges 17 des différents clapets ou de leur joints et ne peuvent plus être la cause d'une mauvaise fermeture de ces clapets ou d'un dépôt gênant le fonctionnement du dispositif selon l'invention. La fiabilité dans le temps du dispositif est donc encore augmentée.

Lorsque le bloc de sécurité 9 n'en comporte qu'une, cette pièce aimantée 32 est préférentiellement disposée dans le circuit hydraulique alimentant la chambre prioritaire au niveau de la sécurité, généralement la chambre côté fond 5 comme expliqué précédemment.

Bien que non représentée sur les figures, une variante comportant deux pièces aimantées 32 se trouvant chacune dans l'un des circuits hydrauliques d'alimentation des chambres 5 et 6 du vérin est parfaitement envisageable.

Comme représenté, la pièce aimantée 32 peut avantageusement être disposée au niveau du bouchon 33 du bloc de sécurité 9. Elle peut ainsi être facilement mise en place et éventuellement nettoyée lors d'opérations ultérieures de maintenance.

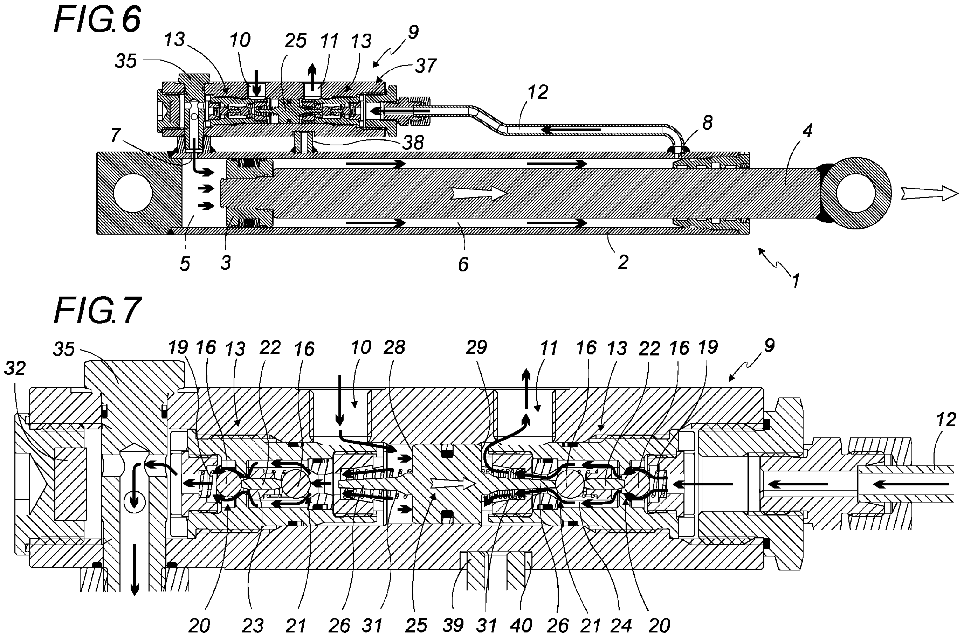

Le fonctionnement du bloc de sécurité 9 selon l'invention découle de manière évidente des moyens décrits ci-dessus et va maintenant être expliqué plus en détails, en référence aux figures 6 à 11 qui illustrent le fonctionnement du mode de réalisation préférentiel représenté.

Afin de faciliter la compréhension, sur ces figures, la circulation du fluide hydraulique est symbolisée par des flèches fines de couleur noire et le déplacement des pièces mécaniques par des flèches épaisses de couleur blanche.

Dans un but de simplification uniquement, on appellera ci-après « dispositif d'isolement côté fond » un dispositif d'isolement 13 placé sur le circuit hydraulique alimentant la chambre côté fond 5 du vérin 1, et « dispositif d'isolement côté tige » un dispositif d'isolement 13 placé sur le circuit hydraulique alimentant la chambre côté tige 6 du vérin 1.

Le bloc de sécurité 9 présente trois états de fonctionnement différents, selon que l'opérateur commande la sortie ou la rentrée de la tige 4 du vérin, ou en l'absence de commande de sa part.

### Sortie de la tige du vérin (figures 6 et 7)

Lorsque l'opérateur commande la sortie de la tige 4 du vérin 1, de l'huile sous pression arrive par l'entrée 10 du bloc de sécurité 9, afin de venir remplir la chambre côté fond 5 du vérin 1, en passant par l'orifice 7. Ce fluide sous pression, pénétrant dans le dispositif par l'entrée 10, vient appuyer contre la face latérale 28 de la pièce de commande 25 et pousse cette dernière loin du dispositif d'isolement 13 côté fond, vers le dispositif d'isolement 13 côté tige.

Le fluide sous pression pénètre dans le dispositif d'isolement 13 côté fond et vient pousser la bille 16 du clapet secondaire 21. Sous la pression du fluide, celle-ci se décolle de son siège 17 et laisse entrer le fluide sous pression qui vient ensuite pousser la bille 16 du clapet primaire 20 la décollant également de son siège 17. Le dispositif d'isolement 13 côté fond est alors entièrement ouvert et passant.

Le fluide hydraulique sous pression poursuit son chemin jusqu'à sortir du bloc de sécurité 9 et pénétrer dans la chambre côté fond 5 du vérin 1 par son orifice 7. L'huile sous pression vient pousser le piston 3, provoquant ainsi son déplacement vers la chambre côté tige 6 et la sortie de la tige 4 vers l'extérieur du vérin.

Simultanément, le fluide hydraulique présent dans la chambre côté tige 6, chassé par le déplacement du piston 3 qui réduit le volume de la chambre côté tige 6, s'échappe hors de celle-ci à travers l'orifice 8 et emprunte le conduit rigide 12 jusqu'au bloc de sécurité 9.

Dans la variante préférentielle représentée sur les figures 6 et 7, ce fluide hydraulique arrive au niveau du deuxième dispositif d'isolement 13 du bloc de sécurité 9. Ce dispositif d'isolement 13 côté tige est forcé en ouverture par la pièce de commande 25.

En effet, comme indiqué précédemment, sous la pression du fluide hydraulique entrant par l'entrée 10, la pièce de commande 25 s'est éloignée du clapet secondaire 21 du dispositif d'isolement 13 côté fond et s'est simultanément rapprochée du clapet secondaire 21 du dispositif d'isolement 13 côté tige, comprimant par ce mouvement le ressort de rappel 31 situé côté tige. Le doigt latéral saillant 26 prenant naissance de la face latérale 29 de la pièce de commande 25 pousse alors la bille 16 du clapet secondaire 21 hors de son siège 17 et force ainsi l'ouverture du clapet secondaire 21 du dispositif d'isolement côté tige.

Entraînée par ce doigt latéral saillant 26, la bille 16 du clapet secondaire 21 vient à son tour pousser l'extrémité correspondante de la tige coulissante 22 et l'entraîne dans son déplacement jusqu'à pousser, par son autre extrémité, la bille 16 du clapet primaire 20, la contraignant à quitter son siège 17. Le clapet primaire 20 du dispositif d'isolement côté tige se retrouve donc également ouvert.

Le fluide hydraulique quittant la chambre côté tige 6 du vérin 1 peut donc traverser le dispositif d'isolement côté tige, dont les deux clapets 20 et 21 ont été forcés en ouverture par le déplacement de la pièce de commande 25. Le fluide hydraulique quitte alors le bloc de sécurité 9 par son entrée 11 pour retourner au réservoir.

Lorsque la tige 4 du vérin a atteint la position souhaitée, l'opérateur stoppe la commande du distributeur hydraulique et plus aucun fluide n'arrive par l'entrée 10 du bloc de sécurité 9. Plus aucune pression ne s'exerce donc sur la face latérale 28 de la pièce de commande 25 qui retrouve sa position d'équilibre centrale sous l'effet de la pression hydraulique et du ou des ressorts de rappel 31 s'ils sont prévus. Dans cette position, la pièce de commande 25 est éloignée du ou des dispositifs d'isolement 13 et ne peut commander l'ouverture de leurs clapets. En effet, ses doigts latéraux saillants 26 sont trop courts pour être en contact avec les billes 16 des clapets secondaires 21 adjacents.

En l'absence, d'une part de pression de fluide hydraulique pour le dispositif d'isolement côté fond, et d'autre part de poussée par le doigt latéral saillant 26 pour le dispositif d'isolement 13 côté tige, les billes 16 de l'ensemble des clapets reviennent automatiquement se centrer sur leur siège 17 sous l'effet sous l'effet de la pression hydraulique et de leurs ressorts de rappel 19 respectifs s'ils sont prévus, et referment ces clapets de manière étanche.

Dans la plupart des cas, la pression hydraulique est suffisante pour plaquer les billes 16 sur leur siège 17 respectif et pour repousser la pièce de commande 25 en position centrale. Et, plus la pression est importante, meilleure est l'étanchéité. Lorsqu'ils sont présents, les ressorts de rappel 19 et 31 ne sont en fait qu'une aide, une garantie supplémentaire, pour assurer cette fonction lorsque la pression est faible.

Le bloc de sécurité 9 se retrouve alors à l'état verrouillé.

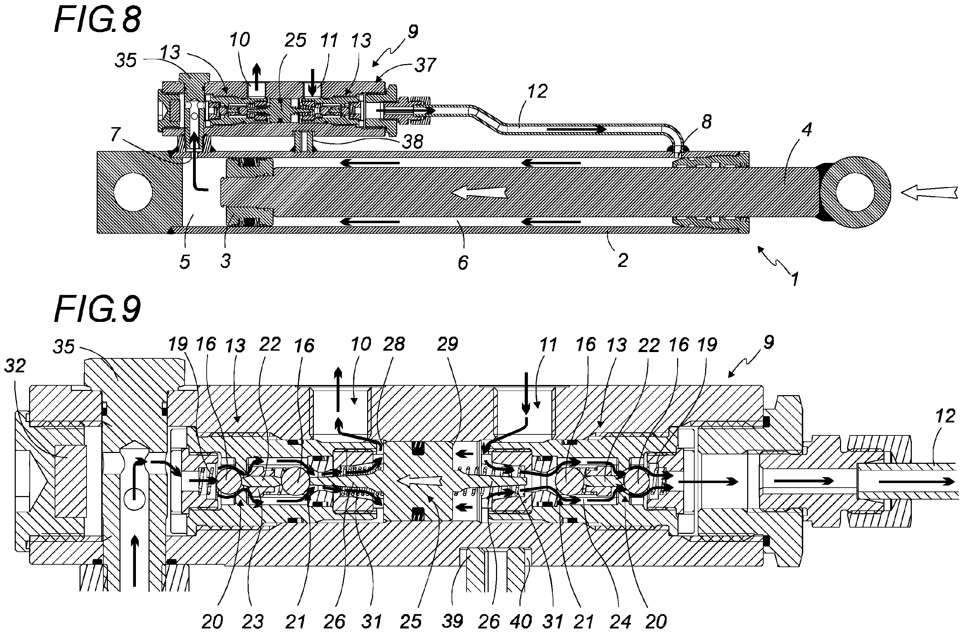

### Rentrée de la tige du vérin (figures 8 et 9)

Lorsque l'opérateur commande la rentrée de la tige 4 du vérin 1, l'huile sous pression arrive cette fois par l'entrée 11 du bloc de sécurité 9 afin de venir remplir la chambre côté tige 6 du vérin 1 en passant par le conduit rigide 12 et l'orifice 8. Ce fluide sous pression vient appuyer contre la face latérale 29 de la pièce de commande 25 et pousse cette dernière en direction du dispositif d'isolement côté fond.

Dans le cas de la variante préférentielle représentée sur les figures 8 et 9, ce fluide hydraulique arrive au niveau du dispositif d'isolement côté tige, dont la pièce de commande 25 s'est éloignée. Le fluide sous pression vient pousser la bille 16 de son clapet secondaire 21 qui s'éloigne de son siège 17 sous la pression. Le fluide sous pression vient ensuite pousser la bille 16 du clapet primaire 20 et l'ouvrir à son tour. Le dispositif d'isolement 13 côté tige est alors entièrement ouvert et passant. Le fluide hydraulique peut donc le traverser et atteindre le conduit rigide 12 pour aller remplir la chambre côté tige 6 du vérin.

L'huile sous pression pousse le piston 3 en direction de la chambre côté fond 5, ce qui provoque la rentrée de la tige 4 du vérin.

Simultanément, le fluide hydraulique présent dans la chambre côté fond 5, chassé par le déplacement du piston 3 qui réduit le volume de la chambre côté fond 5, doit être évacué par l'orifice 7 à travers le bloc de sécurité 9.

Ce fluide hydraulique arrive au niveau du dispositif d'isolement côté fond du bloc de sécurité 9, qui est forcé en ouverture par la pièce de commande 25.

En effet, comme indiqué précédemment, sous la pression du fluide hydraulique entrant par l'entrée 11, la pièce de commande 25 s'est rapprochée du dispositif d'isolement côté fond, comprimant le ressort de rappel 31 situé côté fond. Par ce mouvement, le doigt latéral saillant 26 de la face latérale 28 de la pièce de commande 25 se retrouve contre la bille 16 du clapet secondaire 21 du dispositif d'isolement côté fond et la pousse hors de son siège 17, forçant ainsi l'ouverture du clapet secondaire 21.

La bille 16 du clapet secondaire 21 vient à son tour pousser l'extrémité correspondante de la tige coulissante 22 et l'entraîne dans son mouvement jusqu'à pousser, par son autre extrémité, la bille 16 du clapet primaire 20 hors de son siège 17. Le clapet primaire 20 du dispositif d'isolement côté fond se retrouve donc également ouvert.

Le fluide hydraulique quittant la chambre côté fond 5 du vérin 1 peut donc traverser le dispositif d'isolement côté fond, dont les deux clapets 20 et 21 ont été forcés en ouverture par le déplacement de la pièce de commande 25. Il quitte ensuite le bloc de sécurité 9 par son entrée 10 pour retourner au réservoir.

Lorsque la tige 4 du vérin a atteint la position souhaitée, l'opérateur stoppe la commande du distributeur hydraulique et plus aucun fluide n'arrive par l'entrée 11 du bloc de sécurité 9. Plus aucune pression ne s'exerce donc sur la face latérale 29 de la pièce de commande 25 qui retrouve sa position d'équilibre centrale sous l'effet de la pression hydraulique et du ou des ressorts de rappel 31 s'ils sont prévus. Dans cette position, la pièce de commande 25 est éloignée du ou des dispositifs d'isolement 13 et ne peut commander l'ouverture de leurs clapets.

En l'absence, d'une part, de pression de fluide hydraulique pour le dispositif d'isolement côté tige, et, d'autre part, de poussée par le doigt latéral saillant 26 pour le dispositif d'isolement côté fond, les billes 16 de l'ensemble des clapets reviennent automatiquement se centrer sur leur siège 17 sous l'effet de la pression hydraulique et de leurs ressorts de rappel 19 respectifs s'ils sont prévus, et referment ces clapets de manière étanche.

Le bloc de sécurité 9 se retrouve alors à l'état verrouillé.

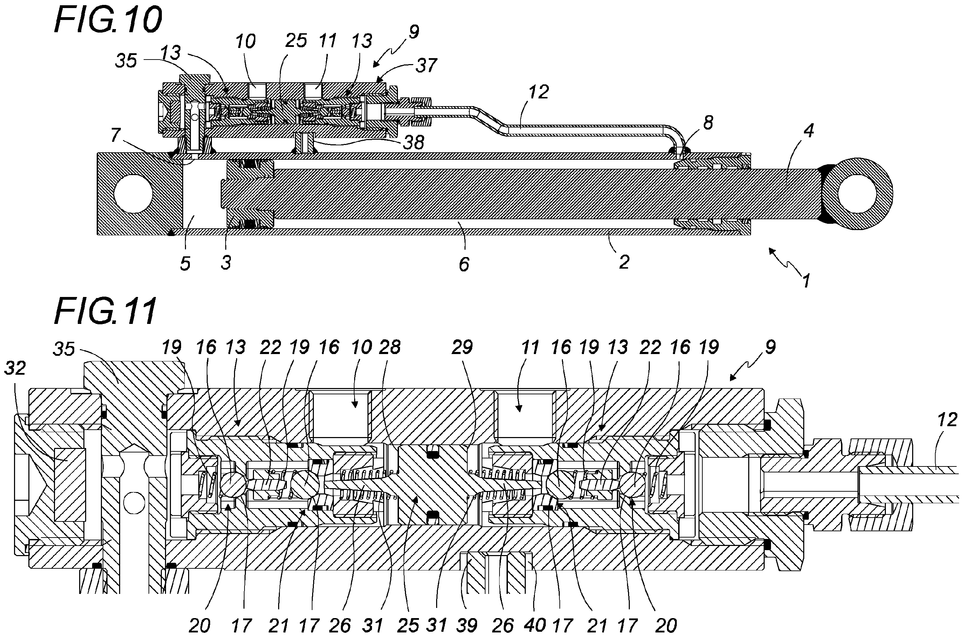

### Etat verrouillé (figures 10 et 11)

En l'absence d'arrivée de fluide hydraulique par les entrées 10 et 11 du bloc de sécurité 9, correspondant à une absence de commande de la part de l'opérateur, le dispositif se trouve à l'état verrouillé.

Comme représenté, en présence de ressorts 31, la pièce de commande 25 est en position d'équilibre centrale ou quasi-centrale et son ou ses doigts latéraux saillants 26 sont éloignés des clapets secondaires 21.

En l'absence de ressorts 31, elle se trouve dans une position aléatoire entre les deux clapets secondaires 21. Cependant, même si l'un de ses doigts latéraux saillants 26 est en contact avec la bille 16 de l'un de ces clapets secondaires 21, la masse et l'inertie de la pièce de commande 25 sont trop faibles pour que son doigt latéral saillant 26 puisse pousser la bille 16 suffisamment fort pour provoquer l'ouverture du clapet secondaire 21 concerné en l'absence de pression hydraulique, sous l'effet des vibrations par exemple.

L'ensemble des clapets primaires 20 et secondaires 21 sont en position fermée, toutes les billes 16 reposant sur leur siège respectif 17 de manière étanche.

De même, sur les différentes figures, les tiges 22 ont été représentées en appui contre la bille 16 du clapet primaire 20. Cependant, en réalité, elles se trouvent dans une position aléatoire entre les deux billes 16 des clapets primaire 20 et secondaire 21. En effet, il existe un jeu entre les tiges coulissantes 22 et les billes 16 du fait de la longueur des tiges 22 qui est, par construction, insuffisante pour toucher simultanément les deux billes 16. Mais, leur masse et leur inertie sont trop faibles pour qu'elles puissent pousser la bille 16 des clapets primaires 20 suffisamment fort pour commander leur l'ouverture, sous l'effet des vibrations par exemple.

Ainsi, les deux chambres côté fond 5 et côté tige 6 du vérin sont verrouillées de manière étanche, le fluide hydraulique présent dans ces chambre ne pouvant s'en échapper. La position de la tige est donc bloquée par le verrouillage du débit hydraulique.

Dans le cas du mode de réalisation préférentiel représenté sur les figures 10 et 11, cet état est particulièrement sécuritaire, car la position de la tige à l'état chargé est maintenue même en cas de fuite interne entre les deux chambres du vérin. En effet, en cas de transfert d'huile de la chambre côté fond 5 à la chambre côté tige 6, la pression monte dans les deux chambres 5, 6 du vérin 1. Mais comme l'huile, qui est incompressible, ne peut s'échapper à travers le dispositif d'isolement 13 du bloc de sécurité 9 dont les deux clapets successifs sont fermés, le piston 3 ne peut pas se déplacer et faire rentrer la tige 4 en réduisant le volume global dans lequel se trouve le fluide. La charge est ainsi maintenue en toute sécurité.

De manière évidente, l'invention ne se limite pas au mode de réalisation préférentiel décrit précédemment et représenté sur les différentes figures, l'homme du métier pouvant y apporter de nombreuses modifications et imaginer d'autres variantes sans sortir ni de la portée, ni du cadre de l'invention définis par les revendications.

## Revendications

1. Bloc de sécurité (9) à double clapet en série, qui garantit, par le verrouillage du débit hydraulique, le maintien en position de la tige (4) d'un vérin hydraulique (1) double-effet comprenant un fût (2), compartimenté par un piston (3) mobile portant ladite tige (4), en une chambre coté fond (5) et une chambre coté tige (6), ces chambres (5, 6) communiquant chacune avec une conduite hydraulique spécifique permettant l'entrée ou la sortie de fluide dans ou hors de la chambre concernée, bloc de sécurité (9) comportant un dispositif d'isolement (13), destiné à être monté sur l'une des conduites hydrauliques et à travers lequel la chambre correspondante du vérin est alimentée, qui comprend un clapet primaire (20) et un clapet secondaire (21), le clapet primaire (20) étant le plus proche de la chambre concernée, tous deux passants dans le même sens correspondant à l'entrée du fluide dans la chambre concernée et disposés l'un à la suite de l'autre en série, bloc de sécurité (9) **caractérisé**
**en ce qu'**il comporte deux dispositifs d'isolement (13), destinés à être montés chacun sur l'une des conduites hydrauliques, chacune des chambres (5, 6) du vérin (1) étant alimentée à travers l'un de ces dispositifs d'isolement (13) ;
**en ce que** le clapet primaire (20) et le clapet secondaire (21) de chacun de ces dispositifs d'isolement (13) sont des clapets anti-retour à bille, comprenant un siège (17) et une bille (16) ;
**en ce que** chacun de ces dispositifs d'isolement (13) comporte en outre :
- une tige coulissante (22) indépendante, disposée longitudinalement et intercalée entre les billes (16) des clapets primaire (20) et secondaire (21), mais non liée à celles-ci, et susceptible de coulisser vers chacune de ces billes (16) de manière à venir appuyer par l'une de ses extrémités contre la bille (16) située en vis-à-vis, et
- un élément de guidage (42) de la tige coulissante (22) qui assure un guidage de la tige coulissante (22) lors de son coulissement ;
**et en ce que,** dans chacun de ces dispositifs d'isolement (13), la longueur de la tige (22) est prévue suffisamment courte pour ne pas pouvoir être en contact simultanément avec les deux billes (16) en appui sur leur siège (17) respectif lorsque les deux clapets primaire (20) et secondaire (21) sont fermés, mais suffisamment longue pour que la commande en ouverture du clapet secondaire (21) entraine, par le déplacement de sa bille (16) qui vient pousser l'extrémité correspondante de la tige coulissante (22), le coulissement guidé de la tige coulissante (22) vers le clapet primaire (20) et provoque l'ouverture du clapet primaire (20) dont la bille (16) est poussée par l'autre extrémité de la tige coulissante (22).

2. Bloc de sécurité (9) selon la revendication 1 **caractérisé en ce que** dans l'un au moins des dispositifs d'isolement (13) le clapet primaire (20) et le clapet secondaire (21) ne sont pas identiques.

3. Bloc de sécurité (9) selon la revendication 2 **caractérisé en ce que** ledit clapet primaire (20) et ledit clapet secondaire (21) sont différents sur au moins l'une des caractéristiques suivantes : la matière de leur bille (16) ou de leur siège (17), ou le diamètre de leur bille (16).

4. Bloc de sécurité (9) selon l'une quelconque des revendications précédentes **caractérisé en ce que** l'élément de guidage (42) est un support de guidage (23) sensiblement cylindrique dans lequel la tige coulissante (22) est montée, qui coulisse de façon guidée dans un alésage (15) prévu pour la bille du clapet primaire ; et **en ce que** cet alésage (15) ou le support de guidage (23) comporte au moins une rainure longitudinale (24) permettant le passage du fluide hydraulique malgré la présence de la tige coulissante (22) et du support de guidage (23) dans l'alésage (15).

5. Bloc de sécurité (9) selon l'une quelconque des revendications précédentes **caractérisé en ce qu'**il comporte un corps (37) unique dans lequel sont logés les deux dispositifs d'isolement (13).

6. Bloc de sécurité (9) selon l'une quelconque des revendications précédentes **caractérisé en ce que** chaque dispositif d'isolement (13) comporte une pièce de commande (25) située à proximité du clapet secondaire (21), du côté opposé au clapet primaire (20), cette pièce de commande (25) se déplaçant en direction du clapet secondaire (21) et venant pousser la bille (16) du clapet secondaire (21) pour provoquer son ouverture.

7. Bloc de sécurité (9) selon la revendication 6 **caractérisé en ce que** les deux dispositifs d'isolement (13) comportent une pièce de commande (25) unique susceptible de provoquer alternativement l'ouverture du clapet secondaire (21) de chacun des deux dispositifs d'isolement (13).

8. Bloc de sécurité (9) selon la revendication 7 **caractérisé en ce que** la pièce de commande (25) unique est une navette centrale coulissante disposée entre les deux dispositifs d'isolement (13), susceptible de se déplacer alternativement en direction de chacun de ces dispositifs d'isolement (13), et qui, lorsqu'elle arrive à proximité de l'un de ces dispositifs d'isolement (13), provoque l'ouverture de son clapet secondaire (21).

9. Bloc de sécurité (9) selon la revendication 7 ou 8 **caractérisé en ce que** la pièce de commande (25) comporte deux doigts latéraux saillants (26), s'étendant chacun en direction de l'un des dispositifs d'isolement (13), et dont l'extrémité libre (27) vient pousser la bille (16) du clapet secondaire (21) de ce dispositif d'isolement (13) lorsque la pièce de commande (25) arrive à proximité de celui-ci provoquant ainsi son ouverture, ces deux doigts latéraux saillants (26) étant prévus suffisamment courts pour que leurs extrémités libres (27) ne puissent pas être en contact simultanément avec les deux billes (16) des deux clapets secondaires (21) lorsque ces billes (16) sont en appui sur leur siège (17) respectif en position fermée des clapets secondaires (21).

10. Bloc de sécurité (9) selon l'une quelconque des revendications 7 à 9 **caractérisé en ce que** chacune des faces latérales de la pièce de commande (25) est en communication avec l'une des conduites hydrauliques ; et **en ce que** la pièce de commande (25) comporte un joint périmétrique (30) qui s'oppose au passage de fluide hydraulique de l'une à l'autre des conduites hydrauliques.

11. Bloc de sécurité (9) selon l'une quelconque des revendications précédentes **caractérisé en ce qu'**il comporte en outre au moins une pièce aimantée (32) qui attire les particules métalliques polluantes éventuellement présentes dans le fluide hydraulique.

12. Vérin hydraulique (1) double-effet de sécurité, comprenant un fût (2), une tige (4) et un piston (3) qui compartimente le fût (2) en une chambre coté fond (5) et une chambre coté tige (6), vérin (1) **caractérisé en ce qu'**il comporte en outre un bloc de sécurité (9) selon l'une quelconque des revendications précédentes.

13. Vérin hydraulique (1) selon la revendication 12 **caractérisé en ce que** le bloc de sécurité (9) est intégré ou directement fixé sur le fût (2).

14. Vérin hydraulique (1) selon la revendication 13 **caractérisé en ce que** le bloc de sécurité (9) est fixé sur le fût (2) au moyen d'une vis creuse (35) à travers laquelle la chambre côté fond (5) est mise en communication hydraulique avec le clapet primaire (20) du dispositif d'isolement (13) correspondant.

15. Vérin hydraulique (1) selon la revendication 13 **caractérisé en ce que** le bloc de sécurité (9) repose sur un pion (38) fixé sur le fût (2), l'extrémité libre (39) de ce pion (38) étant engagée dans une cavité oblongue (40) ménagée dans le bloc de sécurité et orientée longitudinalement, c'est-à-dire selon l'axe principal du bloc de sécurité (9), afin d'autoriser un jeu longitudinal.

## Patentansprüche

1. Sicherheitsblock (9) mit Doppelklappe in Reihe, der durch Verriegelung des Hydraulikdurchflusses sicherstellt, dass die Stange (4) eines doppeltwirkenden Hydraulikzylinders (1) an ihrer Position bleibt, wobei dieser eine Trommel (2) enthält, die durch einen beweglichen Kolben (3), der die genannte Stange (4) trägt, in eine bodenseitige Kammer (5) und eine stangenseitige (6) Kammer unterteilt ist, wobei diese Kammern (5, 6) jeweils in Verbindung mit einer spezifischen Hydraulikleitung stehen, die den Einlass oder Auslass von Flüssigkeiten in oder aus der jeweiligen Kammer ermöglicht, Sicherheitsblock (9) mit einer Isoliervorrichtung (13), zur Montage auf eine der Hydraulikleitungen und durch die die entsprechende Kammer des Zylinders versorgt wird, mit einer Primärklappe (20) und einer Sekundärklappe (21), wobei die Primärklappe (20) dabei die der jeweiligen Kammer am nächsten liegende ist, beide in dieselbe Richtung verlaufen, die dem Flüssigkeitseinlass in die jeweilige Kammer entspricht und hintereinander in Reihe angeordnet sind,
Sicherheitsblock (9), **dadurch gekennzeichnet,**
**dass** er zwei Isoliervorrichtungen (13), jeweils zur Montage auf einer der Hydraulikleitungen umfasst, wobei jede der Kammern (5, 6) des Zylinders (1) dabei über eine dieser Isoliervorrichtungen (13) versorgt wird;
**dass** die Primärklappe (20) und die Sekundärklappe (21) jeder dieser Isoliervorrichtungen (13) Rückschlag-Kugelventile mit einem Sitz (17) und einer Kugel (16) sind,
**dass jede** dieser Isoliervorrichtungen (13) außerdem enthält:
- eine unabhängige Schieberstange (22), die in Längsrichtung angeordnet ist und zwischen den Kugeln (16) der Primär- (20) und Sekundärklappen (21) eingesetzt, mit diesen aber nicht verbunden sind und in der Lage sind, sich zu jeder dieser Kugeln (16) zu schieben, so dass sie mit einem ihrer Endstücke gegen die gegenüber befindliche Kugel (16) drückt, sowie
- ein Führungselement (42) der Schieberstange (22), die für eine Führung der Schieberstange (22) sorgt, wenn diese geschoben wird;
**und dadurch dass** bei jeder dieser Isoliervorrichtungen (13) die Stangenlänge (22) kurz genug vorgesehen ist, damit sie nicht gleichzeitig Kontakt mit den beiden Kugeln (16) haben kann, die auf ihrem jeweiligen Sitz (17) aufliegen, wenn die beiden Primär- (20) und Sekundärklappen (21) geschlossen sind, aber lang genug vorgesehen ist, damit der Öffnungsbefehl der Sekundärklappe (21) durch Verlagerung der zugehörigen Kugel (16), die von dem entsprechenden Endstück der Schieberstange (22) angestoßen wird, das geführte Schieben der Schieberstange (22) hin zur Primärklappe (20) bewirkt und die Öffnung der Primärklappe (20) veranlasst, deren Kugel (16) vom anderen Endstück der Schieberstange (22) angestoßen wird.

2. Sicherheitsblock (9) nach Anspruch 1, **dadurch gekennzeichnet, dass** in mindestens einer der Isoliervorrichtungen (13) die Primärklappe (20) und die Sekundärklappe (21) nicht identisch sind.

3. Sicherheitsblock (9) nach Anspruch 2, **dadurch gekennzeichnet, dass** die genannte Primärklappe (20) und die genannte Sekundärklappe (21) sich in mindestens einer ihrer folgenden Eigenschaften unterscheiden: Material ihrer Kugel (16) oder ihres Sitzes (17) oder des Durchmessers ihrer Kugel (16).

4. Sicherheitsblock (9) nach einem der vorangehenden Ansprüche, **dadurch gekennzeichnet, dass** es sich bei dem Führungselement (42) um eine im Wesentlichen zylindrische Führungshalterung (23) handelt, in der die Schieberstange (22) montiert ist, die geführt in einer Bohrung (15) gleitet, die für die Kugel der Primärklappe vorgesehen ist; und dadurch dass diese Bohrung (15) oder die Führungshalterung (23) mindestens eine Längsnut (24) aufweisen, durch die die Hydraulikflüssigkeit, trotz des Vorhandenseins der Schieberstange (22) und der Führungshalterung (23) in der Bohrung (15) strömen kann.

5. Sicherheitsblock (9) nach einem der vorangehenden Ansprüche, **dadurch gekennzeichnet, dass** er einen einzigen Körper (37) enthält, in dem die beiden Isoliervorrichtungen (13) untergebracht sind.

6. Sicherheitsblock (9) nach einem der vorangehenden Ansprüche, **dadurch gekennzeichnet, dass** jede Isoliervorrichtung (13) ein Steuerteil (25) enthält, das in der Nähe der Sekundärklappe (21), auf der Seite gegenüber der Primärklappe (20) angeordnet ist, wobei dieses Steuerteil (25) sich in Richtung der Sekundärklappe (21) bewegt und gegen die Kugel (16) der Sekundärklappe (21) stößt, damit diese sich öffnet.

7. Sicherheitsblock (9) nach Anspruch 6, **dadurch gekennzeichnet, dass** die beiden Isoliervorrichtungen (13) ein einziges Steuerteil (25) enthalten, das in der Lage ist, alternativ das Öffnen der Sekundärklappe (21) jeder der beiden Isoliervorrichtungen (13) zu veranlassen.

8. Sicherheitsblock (9) nach Anspruch 7, **dadurch gekennzeichnet, dass** das einzige Steuerteil (25) ein verschiebbares Zentralschiffchen ist, das zwischen den beiden Isoliervorrichtungen (13) angeordnet ist, das sich alternativ in Richtung jeder dieser Isoliervorrichtungen (13) verschieben kann, und das, wenn es in der Nähe einer dieser Isoliervorrichtungen (13) ankommt, die Öffnung ihrer Sekundärklappe (21) verursacht.

9. Sicherheitsblock (9) nach Anspruch 7 oder 8, **dadurch gekennzeichnet, dass** das Steuerteil (25) zwei herausragende, seitliche Finger (26) enthält, von denen jeder in Richtung einer des Isoliervorrichtungen (13) zeigt und deren freies Endstück (27) die Kugel (16) der Sekundärklappe (21) dieser Isoliervorrichtung (13) anstößt, wenn das Steuerteil (25) in ihre Nähe gelangt und so die Öffnung verursacht, wobei diese beiden herausragenden, seitlichen Finger (26) kurz genug vorgesehen sind, damit ihre freien Endstücke (27) nicht gleichzeitig Kontakt mit den beiden Kugeln (16) der beiden Sekundärklappen (21) haben, wenn die beiden (16) Kugeln auf ihrem jeweiligen Sitz (17) in geschlossener Position der Sekundärklappen (21) aufliegen.

10. Sicherheitsblock (9) nach einem der vorangehenden Ansprüche 7 bis 9, **dadurch gekennzeichnet, dass** jede der beiden Seitenteile des Steuerteils (25) mit einer der Hydraulikleitungen in Verbindung steht; und dadurch dass das Steuerteil (25) eine umlaufende Dichtung (30) enthält, die verhindern soll, dass Hydraulikflüssigkeit von einer Hydraulikleitung in die andere läuft.

11. Sicherheitsblock (9) nach einem der vorangehenden Ansprüche, **dadurch gekennzeichnet, dass** er mindestens ein magnetisches Teil (32) enthält, das eventuell in der Hydraulikflüssigkeit vorhandene verschmutzende Metallteilen anzieht.

12. Doppeltwirkender Sicherheits-Hydraulikzylinder (1) mit einer Trommel (2), einer Stange (4) und einem Kolben (3), der die Trommel (2) in eine bodenseitige Kammer (5) und eine stangenseitige Kammer (6) unterteilt, Zylinder (1) **dadurch gekennzeichnet, dass** er außerdem einen Sicherheitsblock (9) nach einem der vorangehenden Ansprüche enthält.

13. Hydraulikzylinder (1) nach Anspruch 12, **dadurch gekennzeichnet, dass** der Sicherheitsblock (9) in die Trommel (2) integriert oder direkt auf ihr befestigt ist.

14. Hydraulikzylinder (1) nach Anspruch 13, **dadurch gekennzeichnet, dass** der Sicherheitsblock (9) mit einer Hohlschraube (35) auf der Trommel (2) befestigt ist, durch den die bodenseitige Kammer (5) in hydraulische Verbindung mit der Primärklappe (20) der entsprechenden Isoliervorrichtung (13) kommt.

15. Hydraulikzylinder (1) nach Anspruch 13, **dadurch gekennzeichnet, dass** der Sicherheitsblock (9) auf einem Zapfen (38) ruht, der auf der Trommel (2) befestigt ist, wobei das freie Endstück (39) dieses Zapfens (38) in eine längliche Aushöhlung (40) einrastet, die im Sicherheitsblock vorgesehen ist und in Längsrichtung angeordnet ist, also entlang der Hauptachse des Sicherheitsblocks (9), um ein gewisses Längsspiel zu ermöglichen.

## Claims

1. A series-connected dual-valve security unit (9) that ensures, by locking the hydraulic flow, the holding in position of the rod (4) of a double-acting hydraulic cylinder (1) comprising a cylinder body (2), compartmentalized by a movable piston (3) supporting said rod (4), into a bottom-side chamber (5) and rod-side chamber (6), said chambers (5, 6) each communicating with a specific hydraulic conduit allowing the entry or exit of fluid into or out of the chamber in question, said security unit (9) including an isolating device (13), intended to be mounted in one of the hydraulic conduits and through which the corresponding chamber of the cylinder is supplied, which comprises a primary valve (20) and a secondary valve (21), the primary valve (20) being the closest to the chamber in question, both passing in the same direction corresponding to the entry of fluid into the chamber in question and arranged one after the other in series, the security unit (9) being **characterized**
**in that** it includes two isolating devices (13), each intended to be mounted in one of the hydraulic conduits, each of the chambers (5, 6) of the cylinder (1) being supplied through one of said isolating devices (13);
**in that** the primary valve (20) and the secondary valve (21) of each of said isolating devices (13) are ball-check valves, comprising a seat (17) and a ball (16);
**in that** each of said isolating devices (13) further includes:
- an independent sliding rod (22), arranged longitudinally and inserted between the balls (16) of the primary (20) and secondary (21) valves, but not connected thereto, and able to slide toward each of said balls (16) so as to press by one end thereof against the ball (16) located in front, and
- a guide element (42) for the sliding rod (22) that provides guiding of the sliding rod (22) during its sliding;
**and in that,** in each of said isolating devices (13), the length of the rod (22) is provided to be short enough not to be able to be in contact simultaneously with both of the balls (16) bearing on their respective seats (17) when the two primary (20) and secondary (21) valves are closed; but long enough that the opening command of the secondary valve (21) causes, through the movement of the ball (16) thereof that pushes the corresponding end of the sliding rod (22), the guided sliding of the sliding rod (22) toward the primary valve (20) and causes the opening of the primary valve (20) the ball (16) whereof is pushed by the other end of the sliding rod (22).

2. The security unit (9) according to claim 1, **characterized in that** in at least one of the isolating devices (13), the primary valve (20) and the secondary valve (21) are not identical.

3. The security unit (9) according to claim 2, **characterized in that** said primary valve (20) and said secondary valve (21) are different in at least one of the following features: the material of the ball (16) or of the seat (17), or the diameter of the ball (16).

4. The security unit (9) according to any one of the preceding claims, **characterized in that** the guide element (42) is a substantially cylindrical guide support (23) in which the sliding rod (22) is mounted, which slides in a guided manner in a bore (15) provided for the ball of the primary valve; and **in that** said bore (15) or the guide support (23) includes at least one longitudinal slot (24) allowing the passage of the hydraulic fluid despite the presence of the sliding rod (22) and the guide support (23) in the bore (15).

5. The security unit (9) according to any one of the preceding claims, **characterized in that** it comprises a single body (37) in which the two isolating devices (13) are housed.

6. The security unit (9) according to any one of the preceding claims, **characterized in that** each isolating device (13) includes a control part (25) located near the secondary valve (21), on the side opposite to the primary valve (20), said control part (25) moving toward the secondary valve (21) and pushing the ball (16) of the secondary valve (21) to cause it to open.

7. The security unit (9) according to claim 6, **characterized in that** the two isolating devices (13) include a single control part (25) able alternately to cause the secondary valve (21) of each of the two isolating devices (13) to open.

8. The security unit (9) according to claim 7, **characterized in that** the single control part (25) is a sliding central shuttle arranged between the two isolating devices (13), able to move alternately toward each of said isolating devices (13), and which, when it arrives near one of said isolating devices (13), causes the secondary valve (21) thereof to open.

9. The security unit (9) according to claim 7 or 8, **characterized in that** the control part (25) includes two protruding lateral fingers (26), each extending toward one of the isolating devices (13), and the free end (27) of which pushes the ball (16) of the secondary valve (21) of said isolating device (13) when the control part (25) arrives near the latter, thus causing it to open, said two protruding lateral fingers (26) being provided to be short enough so that the free ends (27) thereof cannot be in contact simultaneously with both balls (16) of the two secondary valves (21) when said balls (16) are bearing on their respective seats (17) in the closed position of the secondary valves (21).

10. The security unit (9) according to any one of claims 7 to 9, **characterized in that** each of the lateral faces of the control part (25) is in communication with one of the hydraulic conduits; and **in that** the control part (25) includes a perimetric gasket (30) that opposes the passage of hydraulic fluid from one hydraulic conduit to the other.

11. The security unit (9) according to any one of the preceding claims, **characterized in that** it further includes at least one magnetized part (32) that attracts polluting metal particles that may be present in the hydraulic fluid.

12. A security double-acting hydraulic cylinder (1), comprising a cylinder body (2), a rod (4) and a piston (3) that compartmentalizes the cylinder body (2) into a bottom-side chamber (5) and a rod-side chamber (6), the cylinder (1) being **characterized in that** it further includes a security unit (9) according to any one of the preceding claims.

13. The hydraulic cylinder (1) according to claim 12, **characterized in that** the security unit (9) is integrated into or directly fastened onto the cylinder body (2).

14. The hydraulic cylinder (1) according to claim 13, **characterized in that** the security unit (9) is fastened onto the cylinder body (2) using a hollow screw (35) through which the bottom-side chamber (5) is placed in hydraulic communication with the primary valve (20) of the corresponding isolating device (13).

15. The hydraulic cylinder (1) according to claim 13, **characterized in that** the security unit (9) rests on a pin (38) fastened on the cylinder body (2), the free end (39) of said pin (38) being engaged in an oblong cavity (40) arranged in the security unit and oriented longitudinally, i.e., along the main axis of the security unit (9), in order to allow longitudinal play.
